# EUROPÄISCHE PATENTSCHRIFT

(11) **EP 0 936 164 B1**
(45) Veröffentlichungstag und Bekanntmachung des Hinweises auf die Patenterteilung: **16.04.2003**
(21) Anmeldenummer: 99101163.6
(22) Anmeldetag: 22.01.1999
(51) Int. Cl.: B65G 53/46

(54) **Zellenradschleuse mit Zusatzlagerung**
Cellular rotary valve with additional bearing assembly
Vanne à roue cellulaire avec palier additionel

(30) Priorität: 05.02.1998 DE 19804431
(43) Veröffentlichungstag der Anmeldung: 18.08.1999
(73) Patentinhaber: MOTAN Materials Handling GmbH, 88250 Weingarten (DE)
(72) Erfinder: Heep, Michael, 88250 Weingarten (DE); Heep, Dieter, 88368 Bergatreute (DE)
(74) Vertreter: Riebling, Peter, Dr.-Ing.

(56) Entgegenhaltungen:
- DE-A- 4 033 011
- DE-B- 1 255 038
- DE-C- 3 940 670

## Beschreibung

Die Erfindung betrifft eine Zellenradschleuse der im Oberbegriff des Anspruchs 1 angegebenen Art.

Bei Zellenradschleusen mit horizontal angeordnetem Zellenrad sind die Wellen grundsätzlich in den seitlich am Gehäuse angeordneten Seitendeckeln drehbar gelagert.

Der Abstand zwischen dem wenig verformbaren Zellenradkörper und dem Kugellager ist abhängig von der gewählten Wellenabdichtung, Simmerring-, Gleitring- oder Stopfbuchsabdichtung und bestimmt die Durchbiegung der Zellenradwellenstummel, wenn Differenzdruck am Ein- oder Ausgang der Zellenradschleuse angelegt wird.

Zum Drehen des Zellenrades im Gehäuse ist ein Spalt notwendig, der sich aus folgenden Kriterien zusammensetzt:

### Berücksichtigung

- der Durchbiegung
- der Fertigungstoleranz
- des Temperatureinflußes
- notwendiger Sicherheitsabstand bei Eintritt aller Belastungsfälle.

Geht man von einem Standardspalt von 0,10 - 0,25 mm je nach Zellenraddurchmesser aus, dann erkennt man die Schwierigkeiten bei der Fertigung von Zellenradschleusen für Dichtstromförderung, besonders bei einer sich abzeichnenden Entwicklung hin zu 6-bar-Förderungen, die bisher den Druckgefässen vorbehalten blieb.

Einerseits soll die Lagerung so einfach wie möglich sein, andererseits muß sie die Anforderung steigender Belastungen erfüllen.

Verfahrenstechnisch führt die Veränderung der Lage des Zellenrades zur Drehachse im Gehäuse zu den charakteristischen Leckluftkurven unter steigendem Druck, und es macht bei Einsatz einer seitlichen Abdichtung einen erheblichen Aufwand die Dichtung im Sinne einer wünschenswert hohen Lebensdauer von der Biegebewegung zu trennen.

In der DE 39 40 667 C1 werden Dichtstege beschrieben, die mit Rollen am Gehäuse geführt werden, um den Verschleiß der Dichtstege durch die Biegebewegung zu mindern und damit vom Druck der Stege in Biegerichtung auf das Gehäuse zu entlasten.

In der Praxis ist dies nur durchführbar für Schüttgut mit Partikelgrößen 2 x S (S = Spalt), weil eine kleinere Partikelgröße von der Abstützrolle überrolt werden würde. Damit ist die Abdichtung aufgehoben und nicht mehr wirksam.

In der DE 40 33 011 A1 ist dazu eine Zellenradschleuse beschrieben, die eine Lagerung des Zellenrades an beiden Stirnseiten mittels koaxial angeordneten Ringflanschen beschreibt, zwischen diesen jeweils ein Lager angeordnet ist. Ein Ringflansch ist dabei an der Außenseite der Seitenscheibe angeordnet, und der koaxial dazu ausgebildete Ringflansch zur Abstützung des Lagers ist im Lagerdeckel des Gehäuses ausgebildet. Die Dichtung für das Lager wird mittels einem oder zwei Dichtringen oder durch selbst abgedichtete Lager beschrieben. Hierbei ist das Lager rundum als durchgehendes Lager, jeweils eines pro Stirnseite, beschrieben. Die Abstützung des Zellenrades erfolgt also über dessen Ringflansch auf das zugeordnete Lager, und weiter auf den ebenfalls zugeordneten koaxialen zweiten Ringflansch im Lagerdeckel des Gehäuses.

Der vorliegenden Erfindung liegt die Aufgabe zugrunde, auf einfachste Weise mit möglichst genormten Standardteilen der Kugellagerindustrie das Problem der Biegebewegung an Zellenradschleusen mit seitlicher Abdichtung zu eliminieren.

Die Lösung der gestellten Aufgabe erfolgt durch die im Anspruch 1 gegebene technische Lehre.

Wesentliches Merkmal der Erfindung ist, daß mindestens jeweils ein Flanschring an jeder Seitenscheibe des Zellenrades befestigt ist, an dem sich jeweils mindestens eine in radialer Richtung den Flanschring tragende, gehäuseseitige Stützrolle anlegt.

Mit der gegebenen technischen Lehre ergibt sich die Eigenschaft, daß nun das Zellenrad direkt in der Nähe seiner größten Durchbiegung von zusätzlich angeordneten radialen Stützrollen unterstützt wird. Damit wird der zwangsläufig beim Betrieb der Zellenradschleuse auftretenden Durchbiegung der Welle entgegengewirkt, und diese Durchbiegung wird durch die erfindungsgemäss vorgesehenen, seitlich am Zellenrad ansetzenden Stützrollen verhindert. Im Idealfall wird also einer Durchbiebung der Mittenlängsachse der Wellen des Zellenrades durch die erfindungsgemäss vorgesehenen Stützrollen, welche seitlich an der Seitenscheibe des Zellenrades anlegen und diese zusätzlich unterstützen, aufgehoben.

Damit besteht die Eigenschaft, daß nun wesentlich geringere Leckluftverluste auftreten, weil die Leckluftspalte zwischen dem Gehäuse und dem Zellenrad stets auf dem gleichen Wert bleiben, ohne daß sich diese Spalte druckabhängig verändern.

Mit der zusätzlichen Abstützung der Welle des Zellenrades durch die erfindungsgemässen, radialen Stützrollen werden also die Leckluftverluste minimiert.

Damit ist es möglich, eine derartige Zellenradschleuse weit über die bisherigen Förderdrücke von z.B. 3 bar zu betreiben, wodurch mit der vorliegenden Erfindung es erstmals möglich ist, derartige Zellenradschleusen mit Drücken im Bereich von 6 bar und mehr zu betreiben.

Wichtig ist also, daß die radial vorgesehenen Stützrollen möglichst nahe an.den Ort der maximalen Durchbiegung der Welle des Zellenrades gesetzt werden. Dieser Ort ist hierbei die Seitenscheibe des Zellenrades, wobei gehäusefeste Stützrollen vorhanden sind, welche dementsprechend mindestens einen fest an der Seitenscheibe angeordneten Flanschring in.radialer Richtung einwärts abstützen.

Je nach den herrschenden Druckverhältnissen kann es hierbei vorgesehen sein, eine oder mehrere Stützrollen 22 an der Stelle den Flanschring 14 abstützen, die im Betrieb die Überdruckseite in dem vorherrschenden Drucksystem darstellt, und das sie dabei möglichst nahe an der Seitenscheibe 16 des Zellenrades 6, angeordnet sind. Das bedeutet, daß sie der Druckrichtung entgegen angeordnet sind.

Selbstverständlich umfasst die vorliegende Erfindung auch Ausführungsformen, wo mehrere Stützrollen verteilt am Umfang angeordnet sind, für den Fall, daß Seitenkräfte zu erwarten sind.

Mit der gegebenen technischen Lehre ist es vorgesehen, daß die herkömmliche Lagerung der Welle des Zellenrades mit Fest- und Loslagern beibehalten bleibt. Diese Lager werden jetzt nach der Erfindung durch die erfindungsgemäss vorgesehenen, radial das Zellenrad tragenden Stützrollen, entlastet. Sie können dementsprechend geringer dimensioniert werden und es werden hierdurch Herstellungskosten eingespart.

Es liegt auch im Rahmen der vorliegenden Erfindung, neben der radialen Abstützung der Seitenscheibe des Zellenrades noch eine zusätzliche axiale Abstützung in der Nähe der hier vorgesehenen Stützrollen vorzunehmen.

Die erfindungsgemässe technische Lehre liegt also darin, daß das Zellenrad abgestützt wird durch zusätzlichen Einbau von Stütz- und/oder Kurvenrollen mit hoher Tragzahl am Seitendeckel, welche gegenüber der Kraftrichtung bzw. Biegebewegung des Zellenrades angeordnet werden und nach dem Zusammenbau durch Einstellen einer ggf. vorhandenen Exzenterausbildung unter Herausdrücken jeden Lagerspiels das Zellenrad unter Krafteinwirkung in Position halten.

Weiterhin hat sich herausgestellt, daß es vorteilhaft sein kann, Zellenräder dieser Art, besonders in Richtung 6-bar-Belastung von vorneherein gegen die Kraftrichtung aus der Mitte des Gehäuses exzentrisch anzuordnen, um noch niedrigere Leckluftwerte zu erzielen.

Das Zellenrad biegt sich unter Belastung in die gewünschte Mittelposition zurück, wodurch minimalste Leckluftverluste gewährleistet sind.

Hält man mit den Stützrollen das Zellenrad auch unter Belastung in exzentrischer Position, so wäre die radiale Abdichtung wieder einer unerwünschten Abriebskraft unterworfen.

In der EP 0462501 wird ein schwimmend gelagerter Abstützring beschrieben, der sich einer exzentrischen Lage des Zellenrades automatisch anpasst unter Überwindung der O-Ring-Reibung. Da die auf die O-Ringe wirkenden Quetschkräfte erheblich sein können, wird durch die Verschiebung des Zellenrades eine verstärkte Reibung und eine unerwünschte Erwärmung erzeugt. Hier setzt die Erfindung ein, die vorsieht, diesen Abstützring mittels zusätzlicher Steuerrollen zu positionieren. Damit wird er kraftfrei immer auf dem Durchmesser des Dichtringes zur Abdichtung des Zellenrades gegenüber dem Gehäuse gehalten.

Setzt man mindestens 3 Steuerrollen auf den Flansch, so steuern die Rollen die Position des schwimmenden Abstützringes zur vorher eingestellten Exzentrizität der Zellenrad-Gehäusemitte derart, daß keinerlei Krafteinwirkung und damit kein Verschleiß am Dichtring auftritt.

Wichtig bei der vorliegenden Erfindung ist also einmal, daß durch den Einbau zusätzlicher, radial wirkender Stützrollen des Zellenrad im Bereich seiner Durchbiegung abgestützt wird, wodurch nun erstmals eine Aufteilung der stirnseitig vorhandenen Wellenlagern stattfindet, daß nämlich ein zusätzliches Lager vorgesehen ist, welches die Lager entlastet und eine zusätzliche Abstützfunktion erzeugt. Diese Abstützfunktion war mit den bekannten Wellenlagern nicht gegeben.

Weiters besteht mit der zweitgenannten Ausführungsform der Anordnung eines schwimmenden Abstützringes, der von gleichmässig am Umfang verteilt angeordneten Steuerrollen getragen wird, der Vorteil, daß sich dieser Abstützring der exzentrischen Lage des Zellenrades automatisch anpasst und damit eine optimale Abdichtung gegen Leckluftverluste erzielt, weil kein Verschleiß mehr am Dichtring zu verzeichnen ist.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung, offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen
- Figur 1:: schematisiert ein Schnitt durch eine Zellenradschleuse nach der Erfindung,
- Figur 2:: einen Ausschnitt gemäss II in Figur 1 der rechten unteren Seite am Seitendeckel des Zellenrades,
- Figur 3:: eine Draufsicht auf die Abstützanordnung bei entferntem Seitendeckel,
- Figur 4:: eine gegenüber Figur 3 abgewandelte Ausführungsform,
- Figur 5:: eine weitere gegenüber Figur 3 abgewandelte Ausführungsform,
- Figur 6:: die Darstellung eines Details ähnlich II in Figur 1 mit einer Abwandlung der Abdichtung,
- Figur 7:: eine gegenüber Figur 1 abgewandelte Ausführungsform mit einem schwimmend gelagerten Abstützring im Schnitt,
- Figur 8:: die Draufsicht auf die Anordnung nach Figur 7 in einem vergrößerten Maßstab.

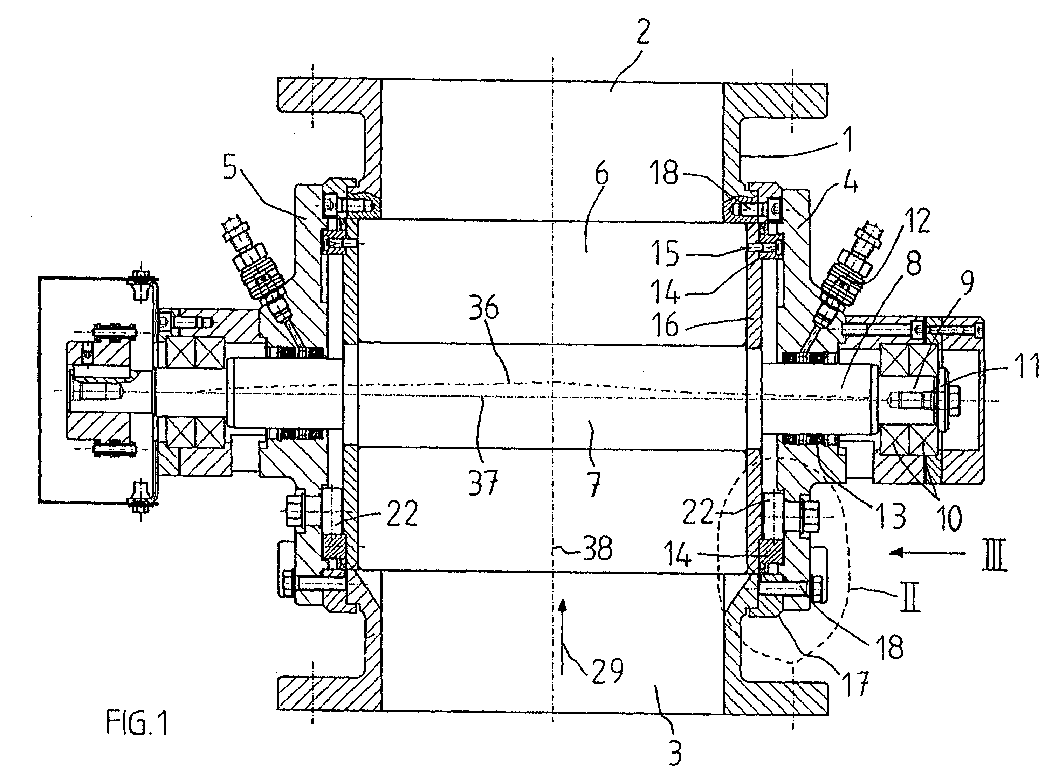

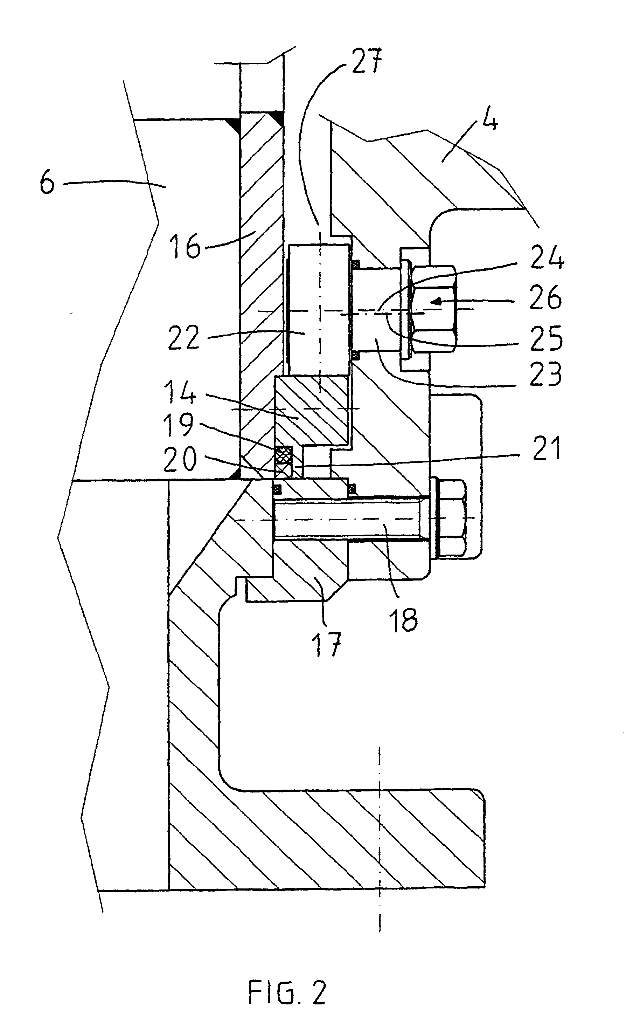

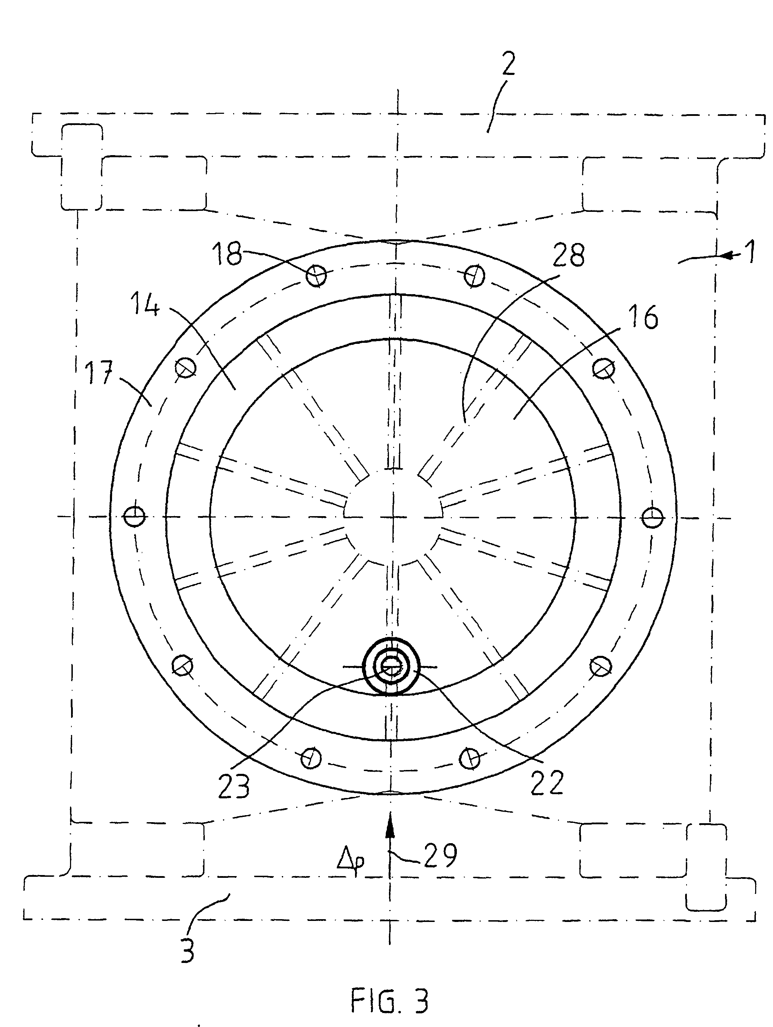

Gemäss Figur 1 und 2 besteht die Zellenradschleuse aus einem Gehäuse 1, an dessen oberem Teil ein Einlauf 2 und an dessen unterem Teil ein Auslauf 3 angeordnet sind. Im Innenraum des Gehäuses 1 ist das Zellenrad 6 drehbar gelagert und weist in ansich bekannter Weise einzelne Abteile auf, die durch zugeordnete Stege 28 (vergl. Figur 3) voneinander abgetrennt sind.

Die Welle 7, die drehfest mit dem Zellenrad 6 verbunden ist, greift durch die jeweiligen Seitendeckel 4,5 des Gehäuses 1 hindurch und endet in einem ersten Wellenstumpf 8, der seinerseits in einen Wellenstummel 9 fortgesetzt ist.

Im Bereich des Wellenstumpfes 8 ist eine Luftspülung 12 mit einer zugeordneten Simmerringanordnung 13 zur Abdichtung des Wellenstumpfes 8 gegenüber der Atmosphäre vorgesehen. Die radiale und axiale Lagerung der Welle 7 erfolgt hierbei im Bereich des Wellenstummels 9, wo im gezeigten Ausführungsbeispiel 2 Lager 10 vorhanden sind, wobei das eine als Festlager und das andere als Loslager ausgebildet sein kann, und die Lager mit einer entsprechenden Vorspannschraube 11 vorgespannt sind.

In Figur 1 ist in übertriebener Linienführung dargestellt, daß bei einer Druckeinwirkung in Pfeilrichtung 29 sich die Welle 7 entlang der Durchbiegungskurve 36 in die mit dem geringeren Druck beaufschlagte Seite hin durchbiegt, was mit dem Nachteil verbunden ist, daß sich an der gegenüberliegenden Seite, das ist die Seite die mit dem höheren Druck beaufschlagt ist, der Spalt zwischen dem Zellenrad 6 und dem Gehäuse 1 vergrößert, während sich der Spalt an der mit dem geringeren Druck beaufschlagten Seite zwischen dem Gehäuse 1 und dem Zellenrad 2 entsprechend verringert.

Der Spalt muß deshalb von vornherein so groß gewählt werden, daßauch bei Druckbeaufschlagung im Betrieb eine unerwünschte Materialberührung zwischen dem Zellenrad und dem Gehäuse vermieden wird.

Hier setzt die Erfindung ein, die erfindungsgemäss nun eine zusätzliche radiale Abstützung der Welle 7 vorsieht, so daß es nicht zu der hier gezeigten Durchbiegungskurve 36 kommt, die von der Mittenlängsachse 37 nach oben beabstandet ist.

Erfindungsgemäss ist vorgesehen, daß jeweils an der Seite des Zellenrades 6 ein Flanschring 14, z.B. über Schrauben 15, befestigt ist, an dessen Innenumfang mindestens eine Stützrolle 22 sich abwälzt und diesen Flanschring 14 gegenüber dem Gehäuse trägt.

Im gezeigten Ausführungsbeispiel ist die Stützrolle 22 hierbei in dem jeweiligen Seitendeckel 4,5 angeordnet, der seinerseits über entsprechende Schrauben 18 mit dem Gehäuse 1 verschraubt ist.

Die Einzelheiten ergeben sich hierbei aus Figur 2.

Nachdem die Zellenradschleuse symmetrisch zu der Mittenquerachse 38 ist, reicht es für die weitere Beschreibung der Lagerung aus, jeweils nur die eine Seite dieser Lagerung zu beschreiben, nachdem die andere Seite genau gleich ausgebildet ist.

In Figur 2 ist deshalb die rechte untere Seite der Lagerung gemäss dem Detail 2 in Figur 1 dargestellt, wobei die linke untere Seite genau gleich ausgebildet ist.

Hier ist erkennbar, daß der Flanschring 14 einen radial nach aussen weisenden Flansch 21 aufweist, an dessen Innenseite zwei ineinander liegende Abdichtringe angeordnet sind, nämlich ein einwärts liegender O-Ring 19 und ein auswärts darüber liegender Kolbendichtring 20. Beide Dichtringe 19,20 dienen zur Abdichtung der Seitenscheibe 16 gegenüber dem Gehäuse.

Die gezeigte Stützrolle 22 kann hierbei auf einem Kugellager, einem Nadellager oder einem Tonnenlager gelagert sein. Sie ist im gezeigten Ausführungsbeispiel zylindrisch ausgebildet.

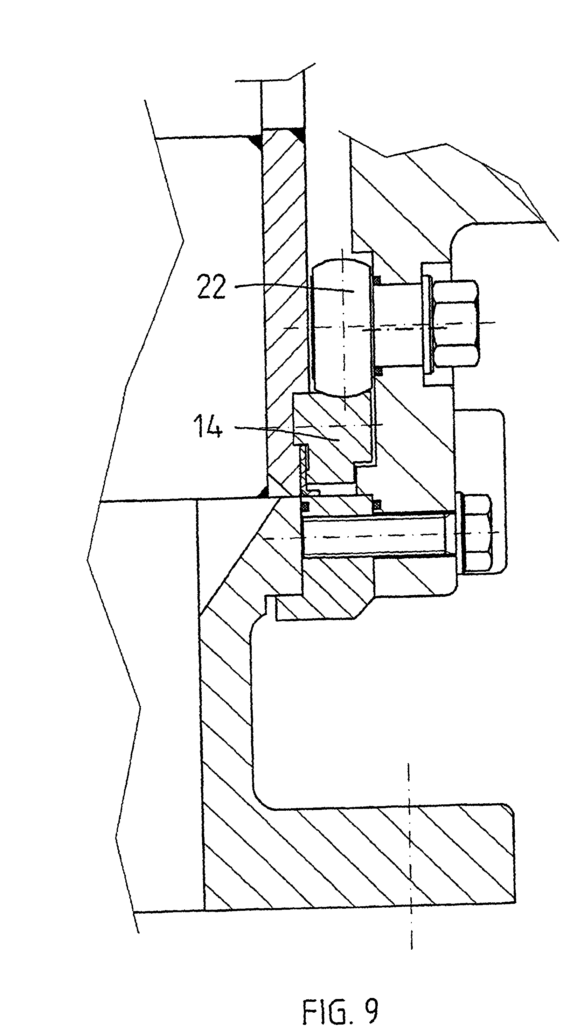

In einer anderen Ausführungsform, wie in Fig 9 dargestellt, ist es jedoch vorgesehen, daß diese Stützrolle 22 ballig ausgebildet ist, und sich auf einer mit einer Nut versehenen Lauffläche des Flanschringes 14 abwälzt, um eine zusätzliche Vorspannung in axialer Richtung zu erreichen.

Zwischen dem Seitendeckel 4 und dem Gehäuse 1 ist noch ein Distanzring 17 angeordnet, der mittels Schrauben 18 am Seitendeckel 4 befestigt ist, wobei dieser Distanzring 17 die vorher beschriebene Dichtungsanordnung 19,20 in radialer Richtung begrenzt. Er kann noch zusätzliche weitere Dichtungen aufweisen.

Es wird bei der Lagerung der Stützrolle 22 bevorzugt, daß diese nicht genau in ihrer Mittenlinie 24 gelagert ist (dies ist im einfachsten Fall nach der Erfindung vorgesehen), sondern daß diese zusätzlich noch mit einem Exzenterlager verbunden ist. Hierbei ist gezeigt, daß diese Stützrolle 22 mit einem Exzenterbund 23 verbunden ist, der in einer Exzenterachse 25 exzentrisch zur Mittenlinie 24 angeordnet ist. Der Exzenterbund 23 kann hierbei bei Position 26 mittels eines Werkzeuges gedreht werden, so daß damit die radiale Lage der Stützrolle 22 stufenlos einstellbar ist. Damit wird die Tragkraft der Stützrolle 22 am Flanschring 14 eingestellt.

Es ist erkennbar, daß die Stützrolle 22 in einer Freistellung 27 zwischen dem Seitendeckel 4 und der Seitenscheibe 16 des Zellenrades 6 läuft und genügend axiales Spiel aufweist.

Die Figur 3 zeigt die Seitenansicht der Figur 2 bei abgenommenem Seitendeckel 4, wo erkennbar ist, daß die besagte Stützrolle 22 mit ihrem Exzenterbund 23 in der dem Auslauf 3 zugewanten Seite am Flanschring 14 angeordnet ist.

Es ist ferner erkennbar, daß bei der in Pfeilrichtung 29 wirkenden Durchbiegungskraft auf die Welle die Stützrolle 22 dieser Durchbiegung entgegenwirkt.

Vorher wurde dargestellt, daß die exzentrische Anordnung der Stützrolle 22 in erster Linie dazu dient, um die Tragkraft der Stützrolle 22 auf dem Flanschring 14 stufenlos einzustellen. Hiermit werden auch evtl. Herstellungsungenauigkeiten ausgeglichen. Es muß also keine hochgenaue Lagerung der Stützrolle 22 erfolgen, weil diese ohnedies noch eingestellt werden kann.

In einer Weiterbildung der Erfindung kann es jedoch vorgesehen sein, daß die Stützrolle 22 exzentrisch so in Gegenrichtung zur Pfeilrichtung 29 radial auswärts eingestellt wird, daß sogar die Welle 7 nach unten durchgebogen wird, um von vornherein einen möglichst engen Leckluftspalt zwischen Gehäuse und Zellenrad zu erreichen und der später eintretenden Durchbiegung von vornherein schon entgegenzutreten.

Es handelt sich also um eine Voreinstellung der Durchbiegung der Welle 7, wobei diese Durchbiegung entgegen der später zu erwartenden, unter Förderlast eintretenden Durchbiegung entgegengesetzt ist.

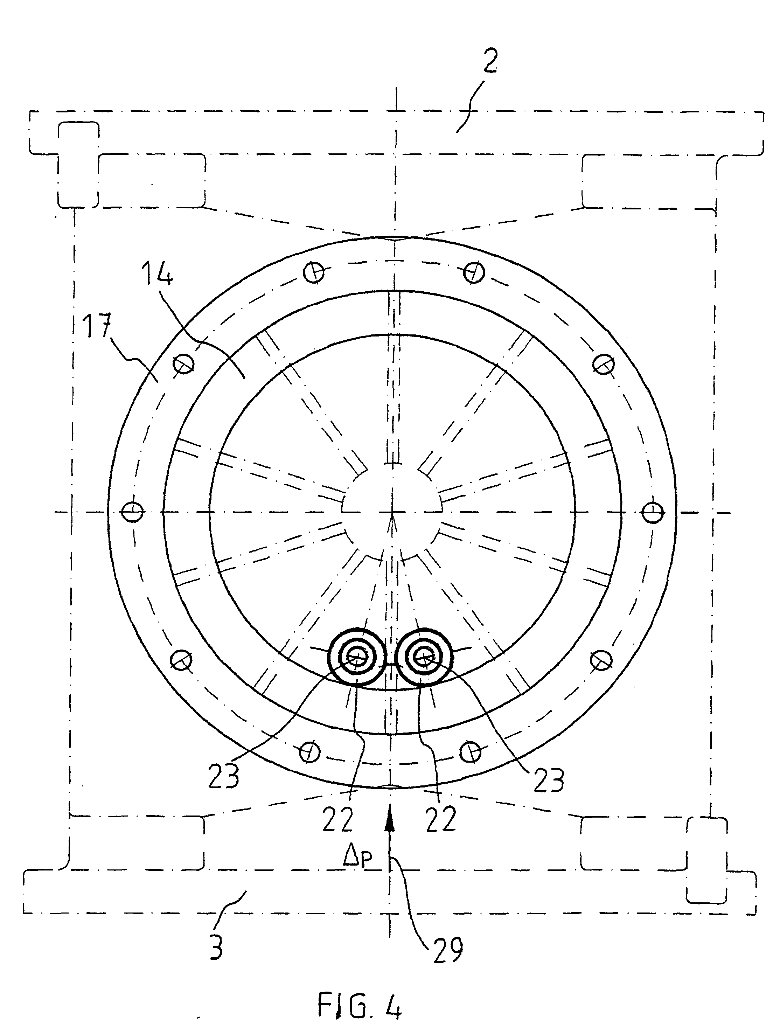

Die Figur 4 zeigt, daß anstatt einer einzigen Stützrolle 22 auch mehrere Stützrollen 22 (hier 2 Stützrollen 22) in der dem Auslauf 3 zugewanten Seite am Flanschring 14 lastübertragend anliegen.

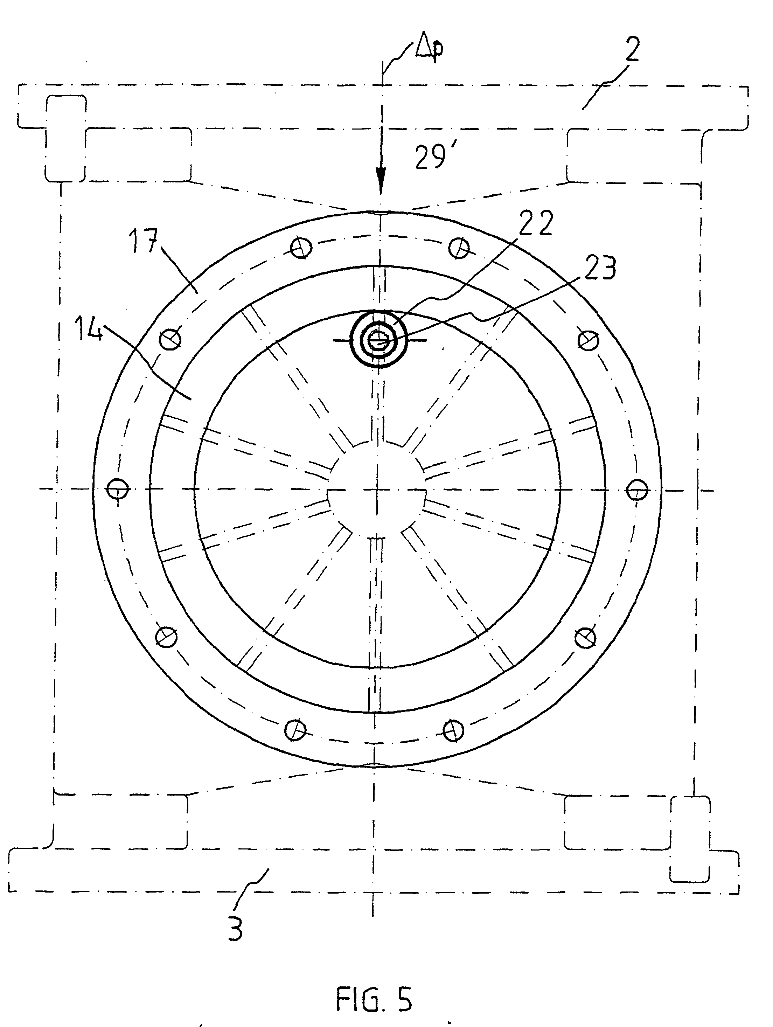

In manchen Anwendungsfällen kommt es gemäss Figur 5 vor, daß die Krafteinwirkung nicht von unten her über den Auslauf 3 in Pfeilrichtung 29 erfolgt, sondern daß - gemäss Figur 5 - die Krafteinwirkung in Pfeilrichtung 29' von oben her über den Einlauf 2 erfolgt. Die Welle würde sich dann genau entgegengesetzt der in Figur 1 dargestellten Durchbiegungskurve 36 durchbiegen.

Um einer derartigen Durchbiegung entgegenzuwirken, ist es nach Figur 5 vorgesehen, daß ein oder mehrere Stützrollen 22 in der dem Einlauf 2 zugewanten Seite am Flanschring 14 lastübertragend anliegen.

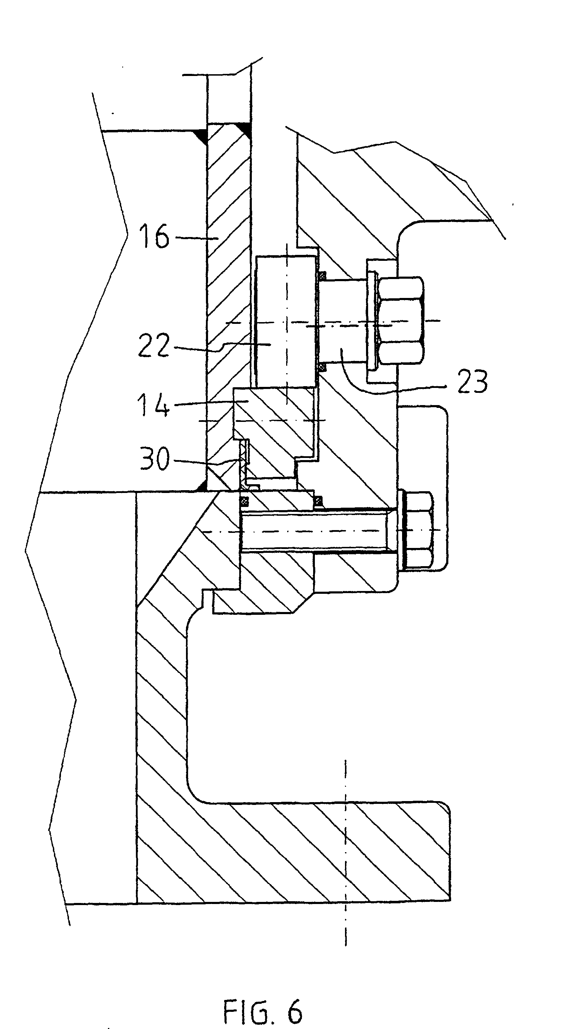

Die Figur 6 zeigt als abgewandeltes Ausführungsbeispiel im Vergleich zur Figur 2 eine abgewandelte Abdichtung, wo erkennbar ist, daß anstatt der Dichtringe 19,20 eine sogenannte Lippendichtung 30 verwendet wird, die im wesentlichen aus einem abgekröpften Ring besteht, der einerseits mit seinem radialen Schenkel von dem Flanschring 14 eingefasst wird und andererseits mit seinem axialen Schenkel auf dem Distanzring 17 abdichtend aufliegt.

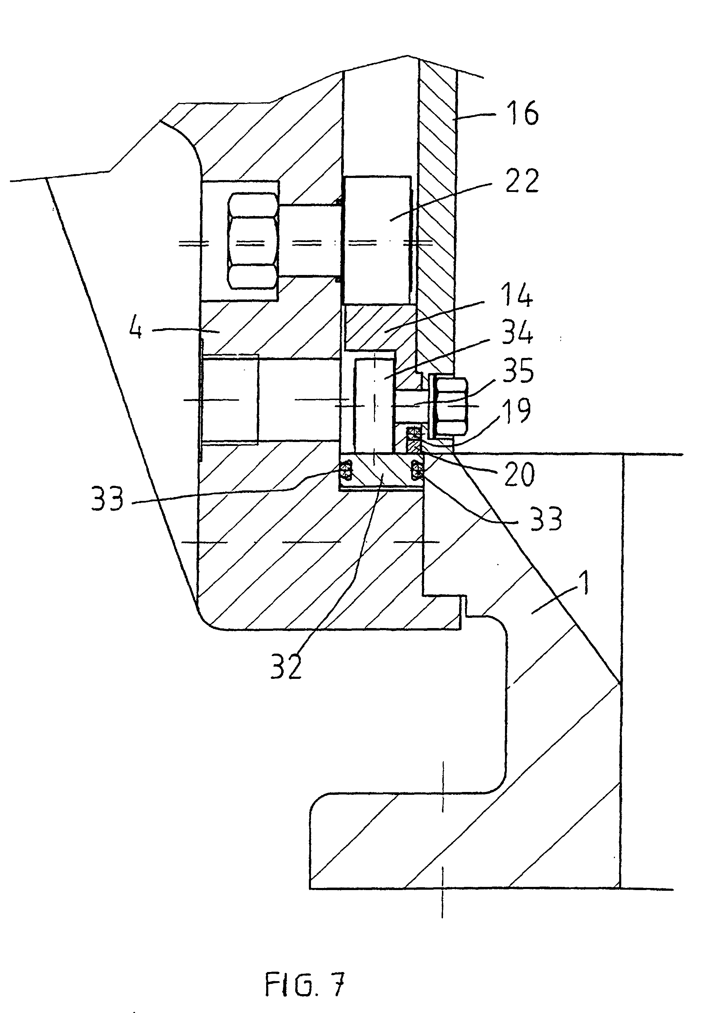

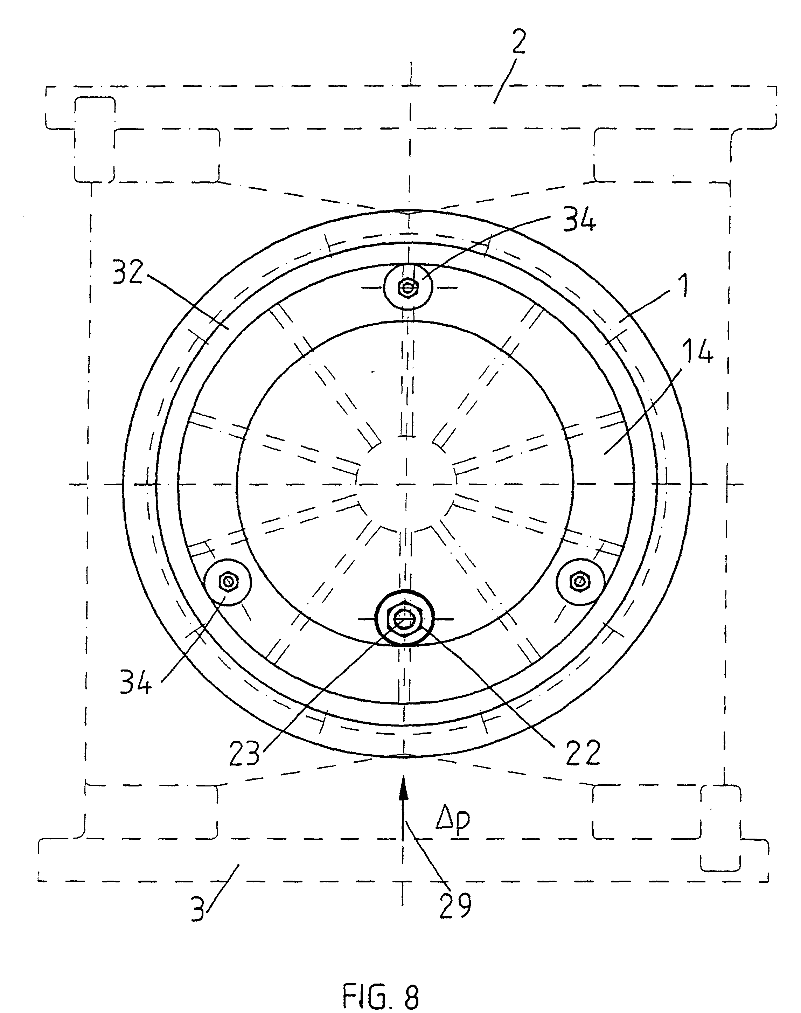

Die Figuren 7 und 8 zeigen einen schwimmend gelagerten Abstützring 32, der mittels axialer O-Ringe 33 gegenüber dem Seitendeckel 4 und dem Gehäuse 1 abgedichtet ist und wird von zugeordneten radial einwärts gerichteten und gleichmässig am Umfang verteilten Steuerrollen 34 getragen, die jeweils exzentrisch in Exzenterbuchsen 35 in radialer Richtung einstellbar sind. Mit der Anordnung dieser drei Steuerrollen 34, die an dem Flanschring 14 befestigt sind, ergibt sich der Vorteil, daß diese rollende Position des schwimmenden Abstützringes 32 zu dem die eigentliche Abdichtung übernehmenden Dichtring 19,20 konstant gehalten wird. Daher kommt es nicht zu einer unerwünschten Abnutzung dieser Dichtringanordnung 19,20, weil der schwimmende Abdichtring 32 mit der Exzentrizität des Zellenrades 6 mitläuft und diese Dichtringe stets auf konstantem Dichtungsquerschnitt hält. Nachdem die Steuerrollen 34 an dem umlaufenden Flanschring 14 befestigt sind, laufen diese mit dem Flanschring um und tragen so den schwimmenden Abstützring 32, der feststeht.

### Zeichnungs-Legende

- 1: Gehäuse
- 2: Einlauf
- 3: Auslauf
- 4: Seitendeckel rechts
- 5: " links
- 6: Zellenrad
- 7: Welle
- 8: Wellenstumpf
- 9: Wellenstummel
- 10: Kugellager
- 11: Vorspannschraube
- 12: Luftspülung
- 13: Simmeringanordnung
- 14: Flanschring
- 15: Schraube
- 16: Seitenscheibe
- 17: Distanzring
- 18: Schraube
- 19: O-Ring
- 20: Kolbendichtring
- 21: Flansch
- 22: Stützrolle
- 23: Exzenterbund
- 24: Mittenlinie
- 25: Exzenterachse
- 26: Position
- 27: Freistellung
- 28: Steg(Zellenrad 6)
- 29: Pfeilrichtung 29'
- 30: Lippendichtring

- 32: schwimmender Abstützring
- 33: O-Ring
- 34: Steuerrolle
- 35: Exzenterbuchse
- 36: Durchbiegungskurve
- 37: Mittenlängsachse
- 38: Mittenquerachse

## Patentansprüche

1. Zellenradschleuse, bestehend aus einem Gehäuse (1) mit einer Einlauf- und einer Auslauföffnung (2, 3), Seitendeckeln, (4, 5) einem Zellrad (6) mit Stegen und Seitenscheiben (16), das auf einer Welle (7) mit Lagern (10) aufgebaut ist, wobei mindestens jeweils ein Flanschring (14) außen an jeder Seitenscheibe (16) des Zellenrades (6) befestigt ist, **dadurch gekennzeichnet, daß** sich an dem Flanschring (14) jeweils mindestens eine, diesen in radialer Richtung tragende, gehäuseseitige Stützrolle (22) anlegt.

2. Zellenradschleuse nach Anspruch 1 **dadurch gekennzeichnet, daß** eine oder mehrere Stützrollen (22) an der Stelle den Flanschring (14) abstützen, die im Betrieb die Überdruckseite in dem vorherrschenden Drucksystem darstellt, und das sie möglichst nahe an der Seitenscheibe (16) des Zellenrades (6), angeordnet sind.

3. Zellenradschleuse nach Anspruch 1 **dadurch gekennzeichnet, daß** mehrere Stützrollen (22) verteilt am Umfang des Gehäuses (1) angeordnet sind.

4. Zellenradschleuse nach Anspruch 1 **dadurch gekennzeichnet, daß** die Stützrollen (22) mit einer exzentrischen Einstellmöglichkeit versehen sind.

5. Zellenradschleuse nach Anspruch 1 **dadurch gekennzeichnet, daß** die Achse des Zellenrades (6) aus der Mitte der Gehäuseachse (1) exzentrisch angeordnet ist.

6. Zellenradschleuse nach Anspruch 1 **dadurch gekennzeichnet, daß** Steuerrollen (34) am Flanschring (14) angeordnet sind.

7. Zellenradschleuse nach Anspruch 1 **dadurch gekennzeichnet, daß** die Stützrolle (22) ballig ausgeführt ist, und der Flanschring (14) eine Nut zur Aufnahme der Stützrolle (22) aufweist.

## Claims

1. Cellular rotary valve, consisting of a housing (1) with an inlet and outlet aperture (2, 3), side covers (4, 5), a cellular wheel (6) with webs and side discs (16), the cellular wheel (6) being constructed on a shaft (7) with bearings (10), wherein at least one respective flange ring (14) is fastened externally on each side disc (16) of the cellular wheel (6), **characterised in that** at least one respective housing-side support roller (22) rests on the flange ring (14), supporting it in radial direction.

2. Cellular rotary valve according to claim 1, **characterised in that** one or more support rollers (22) support the flange ring (14) at the point representing the excess pressure side in the prevailing pressure system during operation, and that they are arranged as close as possible to the side disc (16) of the cellular wheel (6).

3. Cellular rotary valve according to claim 1, **characterised in that** a plurality of support rollers (22) are arranged distributed on the periphery of the housing (1).

4. Cellular rotary valve according to claim 1, **characterised in that** the support rollers (22) are provided with an eccentric possibility for adjustment.

5. Cellular rotary valve according to claim 1, **characterised in that** the axis of the cellular wheel (6) is arranged eccentrically from the centre of the housing axis (1).

6. Cellular rotary valve according to claim 1, **characterised in that** control rollers (34) are arranged on the flange ring (14).

7. Cellular rotary valve according to claim 1, **characterised in that** the support roller (22) is spherical in design and the flange ring (14) comprises a groove for receiving the support roller (22).

## Revendications

1. Vanne à roue cellulaire composée d'un carter (1) avec des ouvertures d'entrée et de sortie (2, 3), des couvercles latéraux (4, 5), une roue cellulaire (6) avec des ailettes et des plaques latérales (16), qui est monté sur un arbre (7) à l'aide de paliers (10), au moins un collier (14) étant fixé, à l'extérieur, à chaque plaque latérale (16) de la roue cellulaire (6), **caractérisée en ce qu'**au moins un galet support (22) prévu côté carter et portant le collier (14) dans le sens radial s'applique contre ledit collier (14).

2. Vanne à roue cellulaire selon la revendication 1, **caractérisée en ce qu'**un ou plusieurs galets supports (22) supportent le collier (14) à l'endroit qui constitue en fonctionnement le côté surpression dans le système de pression prédominant, et **en ce qu'**ils sont disposés le plus près possible de la plaque latérale (16) de la roue cellulaire (6).

3. Vanne à roue cellulaire selon la revendication 1, **caractérisée en ce que** plusieurs galets supports (22) sont répartis sur la circonférence du carter (1).

4. Vanne à roue cellulaire selon la revendication 1, **caractérisée en ce que** les galets supports (22) sont dotés d'une possibilité de réglage excentrique.

5. Vanne à roue cellulaire selon la revendication 1, **caractérisée en ce que** l'axe de la roue cellulaire (6) est excentré par rapport au milieu de l'axe de carter (1).

6. Vanne à roue cellulaire selon la revendication 1, **caractérisée en ce que** des galets de commande (34) sont disposés sur le collier (14).

7. Vanne à roue cellulaire selon la revendication 1, **caractérisée en ce que** le galet support (22) est bombé et le collier (14) présente une rainure pour recevoir le galet support (22).
